# EUROPÄISCHE PATENTSCHRIFT

(11) **EP 2 823 164 B1**
(45) Veröffentlichungstag und Bekanntmachung des Hinweises auf die Patenterteilung: **13.07.2016**
(21) Anmeldenummer: 13707877.0
(22) Anmeldetag: 07.03.2013
(51) Int. Cl.: F01N 3/20, B60K 13/04, B60K 15/03

(54) **VORRICHTUNG ZUR BEREITSTELLUNG VON FLÜSSIGEM ADDITIV**
DEVICE FOR PROVIDING LIQUID ADDITIVE
DISPOSITIF DE PRÉPARATION D'UN ADDITIF LIQUIDE

(30) Priorität: 07.03.2012 DE 102012004727
(43) Veröffentlichungstag der Anmeldung: 14.01.2015
(73) Patentinhaber: Continental Automotive GmbH, 30165 Hannover (DE)
(72) Erfinder: BAUER, Peter, 53721 Siegburg (DE); HODGSON, Jan, 53840 Troisdorf (DE); SCHEPERS, Sven, 53844 Troisdorf (DE)
(86) Internationale Anmeldenummer: PCT/EP2013/054567
(87) Internationale Veröffentlichungsnummer: WO 2013/131992

(56) Entgegenhaltungen:
- EP-A1- 1 925 354
- EP-A2- 2 336 514
- WO-A1-2007/126366
- WO-A1-2011/086038

## Beschreibung

Die Erfindung betrifft eine Vorrichtung zur Bereitstellung von flüssigem Additiv, aufweisend einen Tank für das flüssige Additiv. Die Vorrichtung ist insbesondere dazu geeignet und vorgesehen, das flüssige Additiv einer Abgasbehandlungsvorrichtung einer Verbrennungskraftmaschine in einem Kraftfahrzeug zuzuführen.

Ein besonders häufig in derartigen Abgasbehandlungsvorrichtungen durchgeführtes Abgasreinigungsverfahren ist das Verfahren der selektiven katalytischen Reduktion (SCR-Verfahren, SCR = Selective Catalytic Reduction), bei dem Stickstoffoxidverbindungen im Abgas unter Zuhilfenahme eines Reduktionsmittels reduziert werden. Als Reduktionsmittel wird bei diesem Verfahren regelmäßig Ammoniak verwendet. Ammoniak wird in Kraftfahrzeugen normalerweise nicht direkt bevorratet, sondern in Form einer Reduktionsmittelvorläuferlösung, welche abgasintern und/oder abgasextern in einem dafür vorgesehenen Reaktor zu Ammoniak umgesetzt werden kann. Das flüssige Additiv ist dann typischerweise die beschriebene Reduktionsmittelvorläuferlösung. Eine im Kraftfahrzeugbereich besonders häufig eingesetzte Reduktionsmittelvorläuferlösung ist Harnstoff-Wasser-Lösung, die beispielsweise mit einem Harnstoffgehalt von 32,5 % unter dem Handelsnamen AdBlue® erhältlich ist.

Problematisch bei der Bereitstellung von derartigen flüssigen Additiven ist, dass diese bei niedrigen Temperaturen einfrieren können. Die beschriebene Harnstoff-Wasser-Lösung mit einem Harnstoffgehalt von 32,5 % friert beispielsweise bei Temperaturen von -11 °C ein. Derartig niedrige Temperaturen können im Kraftfahrzeugbereich insbesondere während langer Stillstandzeiten (insbesondere im Winter) auftreten.

Im Falle des Starts eines Kraftfahrzeugs ist es jedoch auch bei derart niedrigen Temperaturen erforderlich, dass möglichst schnell flüssiges Additiv bereitgestellt werden kann, um das beschriebene Abgasreinigungsverfahren auch nach dem Start der Verbrennungskraftmaschine schnell und effizient durchführen zu können. Es ist daher bekannt, in Tanks für flüssiges Additiv zu diesem Zweck Heizvorrichtungen vorzusehen. Ein Tank für ein flüssiges Additiv in einem Kraftfahrzeug sollte möglichst kostengünstig sein. Außerdem ist ein geringer Montageaufwand für den Tank gewünscht, insbesondere im Hinblick auf die Montage von Zusatzbauteilen an dem Tank. Zum Heizen des flüssigen Additivs in dem Tank sollte zudem ein möglichst geringer Energieeinsatz erforderlich sein. Insbesondere sollte die elektrische Energie zum Heizen möglichst gering sein, weil elektrische Energie in Kraftfahrzeugen regelmäßig nur in einem begrenzten Maß zur Verfügung steht. Die Heizung des Tanks mit dem Kühlwasser einer Verbrennungskraftmaschine erfordert hingegen einen weniger sparsamen Umgang mit Heizenergie, weil die Abwärme einer Verbrennungskraftmaschine im Kühlwasser der (warmen/heißen) Verbrennungskraftmaschine normalerweise in ausreichendem Maße vorliegt. Allerdings ist die Abwärme der Verbrennungskraftmaschine insbesondere in der Startphase der Verbrennungskraftmaschine, wenn schnell flüssiges Additiv verfügbar gemacht werden soll, nur in einem begrenzten Maß verfügbar. Daher kann es auch sinnvoll sein, eine elektrische Heizung mit einer Kühlwasserheizvorrichtung zu kombinieren. Dies kann aber erhebliche technische Schwierigkeiten bei der Integration in ein Tanksystem zur Folge haben.

WO 2011/086038 A1 offenbart eine Vorrichtung, umfassend zumindest einen Tank mit einem Tankboden und eine Fördereinheit für eine Flüssigkeit, wobei die Fördereinheit in einer Kammer am Tankboden angeordnet ist, und die Kammer zumindest eine Heizung aufweist.

Hiervon ausgehend ist es Aufgabe der hier vorliegenden Erfindung, die im Zusammenhang mit dem Stand der Technik geschilderten technischen Probleme zu lindern oder sogar zu lösen. Es sollen insbesondere eine besonders vorteilhafte Vorrichtung zur Bereitstellung von flüssigem. Additiv (insbesondere ein Reduktionsmittel) sowie ein Verfahren zur Montage einer entsprechenden Vorrichtung für den bevorzugten Einsatz bei einem Kraftfahrzeug angegeben werden.

Diese Aufgaben werden gelöst mit einer Vorrichtung gemäß den Merkmalen des Patentanspruchs 1 und mit einem Verfahren gemäß den Merkmalen des Patentanspruchs 9. Weitere vorteilhafte Ausgestaltungen der Erfindung sind in den abhängig formulierten Patentansprüchen angegeben. Die in den Patentansprüchen einzeln aufgeführter Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung zur Bereitstellung von flüssigem Additiv, aufweisend einen Tank für das flüssige Additiv, welcher zumindest eine Wärmeverteilstruktur zur Verteilung von Wärme in einem ersten Tankabschnitt aufweist, und eine in den Tank eingesetzte Fördereinheit zur Entnahme des flüssigen Additivs aus dem Tank, welche zumindest eine Heizvorrichtung umfasst, wobei die Heizvorrichtung der Fördereinheit und die Wärmeverteilvorrichtung des Tanks durch zumindest eine thermische Kopplung miteinander verbunden sind.

Die Vorrichtung umfasst vorzugsweise den Tank sowie die beschriebene Fördereinheit, welche in dem Tank eingebaut ist. Die Vorrichtung stellt damit ein Gesamtsystem dar, welches flüssiges Additiv (insbesondere Harnstoff-Wasser-Lösung) bereitstellt (lagert und fördert).

An der Vorrichtung ist vorzugsweise ein Anschlusselement vorgesehen, an welchen eine Leitung angeschlossen werden kann, mittels der das flüssige Additiv von der Vorrichtung zu einem Verbraucher geführt werden kann. Der Verbraucher ist beispielsweise eine Zufuhrvorrichtung, welche das flüssige Additiv einer Abgasbehandlungsvorrichtung zuführt.

Der Tank ist vorzugsweise ein Kunststofftank, der beispielsweise mit Hilfe eines Spritzgussverfahrens hergestellt sein kann.

Die Wärmeverteilstruktur kann beispielsweise in Form von (passiv und/oder selbsttätig) wärmeleitenden Elementen ausgeführt sein, die in den Kunststofftank eingegossen bzw. an dem Kunststofftank angeordnet sind. Diese wärmeleitfähigen Elemente können beispielsweise aus Metall und/oder aus einem speziellen wärmeleitfähigen Kunststoff sein. Es ist auch möglich, dass die Wärmeverteilstruktur "heat pipes" umfasst, welche eine besonders effiziente Verteilung der Wärme auch bei geringen Temperaturdifferenzen ermöglichen. "Heat pipes" werden auch als Wärmeleitrohre bezeichnet. Dies sind abgeschlossene Rohre, in denen ein Fluid teilweise in Gasphase und teilweise in Flüssigphase vorliegt, und die durch Verdampfung und Kondensation eine sehr effiziente Wärmeverteilung ermöglichen.

Die Wärmeverteilstruktur erstreckt sich durch einen ersten Tankabschnitt. Der erste Tankabschnitt ist ein Bereich des (inneren) Tankvolumens, welcher vorzugsweise maximal 30 % des Tankvolumens und besonders bevorzugt zwischen 20 % und 5 % des Tankvolumens erfasst. Dabei kann der erste Tankabschnitt auch mit mehreren (beabstandeten) Teilvolumina und/oder als etwa mäanderförmig verlaufendes Teilvolumen des Tanks ausgebildet sein. Damit, dass die Wärmeverteilvorrichtung in dem ersten Tankabschnitt angeordnet ist, kann die Wärmeverteilstruktur innerhalb des ersten Tankabschnitts (lokal) einen sehr großen Einfluss auf das Additiv nehmen, während sie außerhalb des ersten Tankabschnitts nur noch einen geringeren Einfluss hat. Vorzugsweise ist jeder Punkt des Tankvolumens innerhalb des ersten Tankabschnitts in einem Abstand von weniger als 5 cm [Zentimeter] und bevorzugt weniger als 2 cm von der Wärmeverteilstruktur beabstandet. Die Wärmeverteilstruktur ist in der Lage, Wärme in einer unmittelbaren Umgebung sehr gut in das Additiv einzubringen. Weiter von der Wärmeverteilstruktur beabstandete Bereiche des Tanks werden nur noch durch Wärmeleitung über das flüssige Additiv mit erwärmt.

Die Fördereinheit zur Entnahme des flüssigen Additivs aus dem Tank umfasst vorzugsweise ein Gehäuse, das innen - mit Ausnahme von kleinen Kanälen, Leitungen etc. - nicht mit Additiv gefüllt ist. Die Fördereinheit weist eine Ansaugstelle auf, welche im eingebauten Zustand der Fördereinheit im Tank innerhalb des Tanks angeordnet ist, und über welche die Fördereinheit flüssiges Additiv aus dem Tank entnehmen kann.

In dem Gehäuse der Fördereinheit sind vorzugsweise verschiedene Komponenten angeordnet, welche der Förderung des flüssigen Additivs dienen. Derartige Komponenten sind beispielsweise eine Pumpe und/oder ein Ventil, welche eine Steuerung der Förderung und/oder gegebenenfalls eine Entlüftung der Fördereinheit ermöglichen, wenn an der Ansaugstelle Luft angesaugt wurde. Das Anschlusselement zum Anschluss einer Leitung ist vorzugsweise an der Fördereinheit vorgesehen und befindet sich (wenn die Fördereinheit und der Tank zu der beschriebenen Vorrichtung montiert sind) an einer Außenseite der Vorrichtung bzw. des Tanks, damit eine Leitung dort angeschlossen werden kann.

Die Heizvorrichtung der Fördereinheit ist vorzugsweise als (flächige) elektrische Heizvorrichtung ausgeführt. Die elektrische Heizvorrichtung ist vorzugsweise an dem Gehäuse der Fördereinheit so angeordnet, dass sie durch die Gehäusewand hindurch in der Lage ist, flüssiges Additiv in dem Tank zu erwärmen.

Die thermische Kopplung zwischen der Heizvorrichtung und der Wärmeverteilstruktur ist vorzugsweise über ein gut wärmeleitfähiges Material realisiert, welches die Wärmeverteilstruktur und die Heizvorrichtung wärmeleitend aneinander anbindet. Die thermische Kopplung kann auch Bestandteil der Fördereinheit und/oder der Heizvorrichtung sein. Hierbei ist jedenfalls ein geeigneter wärmeleitfahiger Kontakt zwischen der Heizvorrichtung und der Wärmeverteilstruktur vorgesehen. Dieser Kontakt wird durch die thermische Kopplung hergestellt.

Für die Vorrichtung ist auch charakteristisch, dass die Wärmeverteilstruktur Bestandteil des Tanks ist, während die Heizvorrichtung Bestandteil der Fördereinheit ist. Hiermit ist insbesondere gemeint, dass die Wärmeverteilstruktur mit dem Tank (fest) verbunden wird, bevor die Fördereinheit in den Tank eingesetzt wird. Die Heizvorrichtung ist vorzugsweise derart in der Fördereinheit angeordnet, dass kein unmittelbarer Kontakt von der Heizvorrichtung mit dem flüssigen Additiv in dem Tank besteht.

Der Tank weist eine Öffnung im Tankboden aufweist, und die Fördereinheit ist in diese Öffnung eingesetzt. An der Öffnung im Tankboden ist dazu vorzugsweise ein Flansch vorgesehen, in welchen die Fördereinheit fluiddicht eingesetzt werden kann.

Außerdem ist die Vorrichtung vorteilhaft, wenn die Heizvorrichtung eine elektrische Heizvorrichtung ist, und der Tank eine Flüssigkeitsheizung aufweist. Damit sind also sowohl die elektrische Heizvorrichtung in der Fördereinheit als auch eine zusätzliche Flüssigkeitsbeizung im Tank vorgesehen. Die Flüssigkeitsheizung ist beispielsweise als eine in verschiedenen Schleifen (mäanderförmig) durch den Innenraum des Tanks geführte Kühlwasserleitung ausgebildet, durch die (warmes/heißes) Kühlwasser der Verbrennungskraftmaschine fließt. Durch eine derartige Flüssigkeitsheizung kann ein sehr großes Volumen in dem Tank aufgetaut werden. Daher ist eine Flüssigkeitsbeizung für die Heizung des Tanks besonders effizient. Leider ist eine derartige Flüssigkeitsheizung beim Kaltstart einer Verbrennungskraftmaschine noch nicht in der Lage, flüssiges Additiv in dem Tank aufzutauen. Dies liegt daran, dass die Verbrennungskraftmaschine erst eine gewisse Betriebszeit benötigt, damit das Kühlwasser eine ausreichende Temperatur hat, um flüssiges Additiv in dem Tank in einem nennenswerten Umfang aufschmelzen zu können. Daher ist es vorteilhaft, zusätzlich eine elektrische Heizvorrichtung in der Fördereinheit vorzusehen, die ebenfalls eine signifikante Heizwirkung in dem Tankinnenbereich aufweist. Die Flüssigkeitsheizung ist vorzugsweise integraler Bestandteil des Tanks. Die Flüssigkeitsheizung bzw. die Rohre der Flüssigkeitsheizung können beispielsweise zumindest teilweise in einen aus Kunststoff gefertigten Tank eingegossen sein.

Die elektrische Heizung kann in die Fördereinheit integriert sein. In der Fördereinheit sind regelmäßig auch noch weitere elektrische/elektronische Komponenten angeordnet, so dass die elektrischen/elektronischen Komponenten gemeinsam kontaktiert und montiert werden können. Für die Flüssigkeitsheizung sind regelmäßig keine elektrischen Komponenten erforderlich. Der Tank kann daher bei der erfindungsgemäßen Vorrichtung ohne elektrische Komponenten und Anschlüsse realisiert werden.

Weiterhin ist die Vorrichtung vorteilhaft, wenn die Flüssigkeitsheizung zur Einbringung von Wärme in einem zweiten Tankabschnitt ausgebildet ist, und sich der erste Tankabschnitt und der zweite Tankabschnitt zumindest teilweise überlappen.

Der zweite Tankabschnitt, in welchem die Flüssigkeitsheizung Wärme in das flüssige Additiv in den Tank einbringt, ist vorzugsweise wesentlich größer als der erste Tankabschnitt, in dem die Wärme von der Heizvorrichtung verteilt wird. Der zweite Tankabschnitt umfasst vorzugsweise zumindest 50 % und besonders bevorzugt zumindest 80 % des Tankvolumens. Damit, dass sich die Flüssigkeitsheizung durch den zweiten Tankabschnitt hindurch erstreckt, ist insbesondere gemeint, dass jeder beliebige Punkt des zweiten Tankabschnitts in einem Abstand von weniger als 5 cm [Zentimeter], vorzugsweise weniger als 2 cm, von der Flüssigkeitsheizung angeordnet ist. In diesem Bereich ist eine besonders effiziente Wärmeeinbringung durch die Flüssigkeitsheizung in das Additiv in dem Tank möglich.

Dadurch, dass der erste Tankabschnitt und der zweite Tankabschnitt sich zumindest teilweise überlappen bzw. überlagern, ist ermöglicht, dass zwischen dem ersten Tankabschnitt und dem zweiten Tankabschnitt kein eingefrorenes Additiv verbleibt, sondern dass ein Austausch von flüssigem Additiv zwischen dem ersten Tankabschnitt und dem zweiten Tankabschnitt stattfindet. Die elektrische Heizvorrichtung in der Fördereinheit und die Flüssigkeitsheizung wirken vorzugsweise zusammen, um möglichst schnell ein möglichst großes Volumen an flüssigem Additiv in dem Tank zu erzeugen, wenn das Additiv in dem Tank (beim Start der Verbrennungskraftmaschine) eingefroren ist.

Nach einer Weiterbildung der Vorrichtung ist vorgesehen, dass die Flüssigkeitsheizung zumindest teilweise in eine Filtereinrichtung im Tank eingebettet ist, welche dazu eingerichtet ist, flüssiges Additiv zu filtern, das mit Hilfe der Fördereinheit aus dem Tank hinausgefördert wird.

In dem flüssigen Additiv, bzw. im Tank, befinden sich typischerweise Verunreinigungen, welche nicht in die Fördereinheit gelangen sollten, weil diese beispielsweise zu einem Verstopfen von Kanälen in der Fördereinheit und insbesondere der Pumpe in der Fördereinheit führen können. Daher ist es vorteilhaft, wenn ein Filter die Ansaugstelle von der Fördereinheit von dem sonstigen Tankvolumen trennt. Hierbei ist der Filter demnach Bestandteil des Tanks und zusammen mit der Flüssigkeitsheizung mit dem Tank verbunden. Die Flüssigkeitsheizung weist eine relativ hohe mechanische Stabilität auf. weil sie typischerweise aus einem metallischen, besonders gut wärmeleitfähigen Material gefertigt ist. Die Flüssigkeitsheizung kann daher als eine Art Käfig wirken, welche die Filtereinrichtung im Tank stützt bzw. realisiert.

Die Wärmeverteilstruktur umfasst Rippen, welche sich ausgehend vom Tankboden in einen Innenraum des Tanks erstrecken.

Zudem hat der Tank eine Tankwand aus Kunststoff , und die Wärmeverteilstruktur ist zumindest teilweise in die Tankwand eingegossen .

Derartige Rippen können beispielsweise Metallbleche sein, welche sich vom Tank-boden ausgehend nach oben erstrecken und welche teilweise in einen aus Kunststoff gefertigten Tank mit eingegossen sind. An diesen Rippen können Verbindungsabschnitte ausgebildet sein, welche bei eingebauter Fördereinheit in dem Tank an der Fördereinheit bzw. an dem Gehäuse der Fördereinheit anliegen und so eine thermische Kopplung zwischen der Wärmeverteilstruktur und der Fördereinheit gewährleisten.

Auch ist die Vorrichtung vorteilhaft, wenn die Wänneverteilstruktur zumindest teilweise in eine Filtereinrichtung im Tank eingebettet ist, welche dazu eingerichtet ist, flüssiges Additiv zu filtern, welches mit Hilfe der Fördereinheit aus dem Tank hinausgefördert wird. Die Wärmeverteilstruktur kann - ähnlich wie auch eine Flüssigkeitsheizung - in eine derartige Filterstruktur eingebettet sein. Es ist auch möglich, dass sowohl die Wänneverteilstruktur als auch eine Flüssigkeitsheizung in eine Filtereinrichtung im Tank eingebettet sind. Auch die Wärmeverteilstruktur ist vorzugsweise relativ starr. Wie bereits weiter oben beschrieben, ist die Wärmeverteilstruktur vorzugsweise aus einem metallischen Material gefertigt. Sie ist daher auch geeignet, die Filtereinrichtung zu halten, so dass diese ihre Position in dem Tank behält.

Gemäß einem weiteren Aspekt wird nun noch ein Verfahren zur Montage einer Vorrichtung zur Bereitstellung von flüssigem Additiv angegeben, aufweisend zumindest die folgenden Schritte:
a) Bereitstellen eines Tanks für das flüssige Additiv, welcher zumindest eine Wärmeverteilstruktur aufweist;
b) Bereitstellen einer Fördereinheit zur Entnahme des flüssigen Additivs aus dem Tank, welche zumindest eine Heizvorrichtung aufweist;
c) Einsetzen der Fördereinheit in den Tank; und
d) Verbinden der Wärmeverteilstruktur und der Heizvorrichtung mit mindestens einer thermischen Kopplung.

Bei diesem Verfahren ist hervorzuheben, dass zunächst ein Tank bereitgestellt wird, in welchen die beschriebene Wärmeverteilstruktur schon integriert ist. Erst danach wird in den Tank die Fördereinheit eingesetzt, welche die Heizvorrichtung umfasst. Auch die Fördereinheit ist vorzugsweise bereits vormontiert und die Heizvorrichtung befindet sich bereits in der Fördereinheit.

Das Verbinden der Wärmeverteilstruktur und der Heizvorrichtung mit einer thermischen Kopplung kann auch automatisch/selbstständig passieren, wenn die Fördereinheit in eine beim Tank vorgesehene Öffnung eingesetzt wird. Die Wärmeverteilstruktur kann beispielsweise Abschnitte aufweisen, die an der Fördereinheit anliegen, wenn die Fördereinheit in den Tank eingesetzt ist. Diese Abschnitte bilden dann die beschriebene thermische Kopplung zwischen der Heizvorrichtung in der Fördereinheit und der Wärmeverteilstruktur aus.

Besonders bevorzugtes Einsatzgebiet für die Erfindung ist ein Kraftfahrzeug, aufweisend eine Verbrennungskraftmaschine und eine Abgasbehandlungsvorrichtung zur Reinigung der Abgase der Verbrennungskraftmaschine, eine Zufuhrvorrichtung zur Zufuhr von flüssigem Additiv in die Abgasbehandlungsvorrichtung sowie eine beschriebene Vorrichtung, mit der der Zufuhrvorrichtung flüssiges Additiv bereit gestellt werden kann.

Es ist darauf hinzuweisen, dass die für die erfindungsgemäße Vorrichtung beschriebenen besonderen Vorteile und Ausgestaltungsmerkmale in entsprechender Weise auf das beschriebene Verfahren anwendbar und übertragbar sind. Gleiches gilt für die für das beschriebene Verfahren dargestellten besonderen Vorteile und Ausführungsmerkmale, welche in entsprechender Weise auf die beschriebene Vorrichtung anwendbar und übertragbar sind.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
Fig. 1: eine Ausführungsvariante einer Vorrichtung zur Bereitstellung von flüssigem Additiv, und
Fig. 2: ein Kraftfahrzeug.

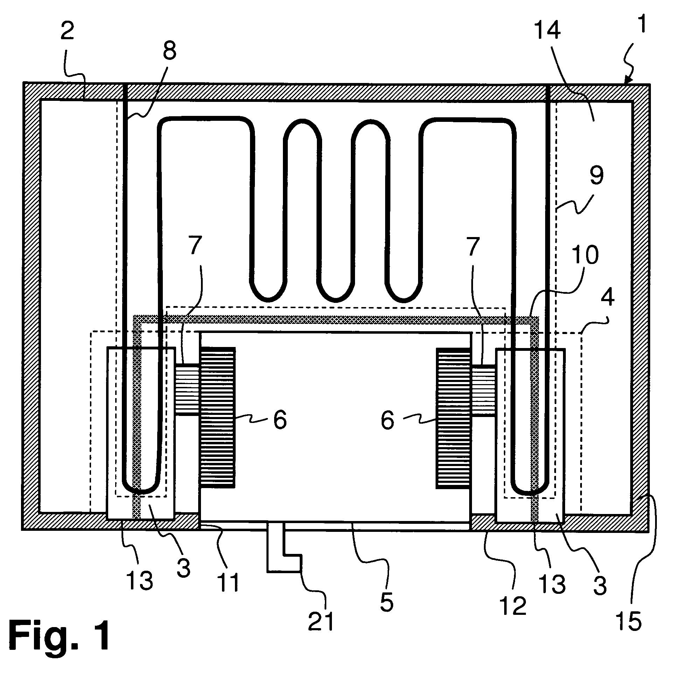

In Fig. 1 ist die beschriebene Vorrichtung 1 umfassend einen Tank 2 und eine Fördereinheit 5 für beispielsweise eine Harnstoff-Wasser-Lösung dargestellt. Der Tank 2 weist eine Tankwand 15 auf. Im Tankboden 12 des Tanks 2 ist eine Öffnung 11 in der Tankwand 15 vorgesehen, in welche die Fördereinheit 5 eingesetzt ist. Der Tank 2 weist Wärmeverteilstrukturen 3 auf, welche sich ausgehend vom Tankboden 12 in einen Innenraum 14 des Tanks 2 hinein erstrecken. Außerdem weist der Tank 2 eine Flüssigkeitsheizung 8 auf, welche sich in Form von (mäanderförmigen) Heizschleifen durch den Innenraum 14 des Tanks hindurch erstreckt. Die Flüssigkeitsheizung 8 überspannt vorzugsweise einen zweiten Tankabschnitt 9 des Innenraums 14. Die beschriebene Wärmeverteilstruktur 3 überspannt vorzugsweise einen ersten Tankabschnitt 4 des Innenraums 14 des Tanks 2. Vorzugsweise überlappen der erste Tankabschnitt 4 und der zweite Tankabschnitt 9 teilweise.

In dem Tank 2 ist zusätzlich eine Filtereinrichtung 10 vorgesehen, welche zumindest von der Flüssigkeitsheizung 8 und/oder von der Wärmeverteilstruktur 3 gestützt wird. Die Wärmeverteilstruktur 3 und/oder die Flüssigkeitsheizung 8 sind jeweils zumindest teilweise in die Filtereinrichtung 10 integriert. In der Fördereinheit 5 ist eine Heizvorrichtung 6 vorgesehen, welche vorzugsweise elektrisch ist. Die Heizvorrichtung 6 ist über eine thermische Kopplung 7 mit der Wärmeverteilstruktur 3 verbunden.

Die Wärmeverteilstruktur 3 ist, wie hier dargestellt, beispielsweise in Form von Rippen 13 ausgebildet.

An der Fördereinheit 5 (einschließlich beispielsweise einer Pumpe, Ventile, Sensoren, Kontrolleinheit, etc.) ist ein Anschlusselement 21 vorgesehen, zu dem die Vorrichtung 1 flüssiges Additiv fördern kann. Hiervon ausgehend wird das Additiv über das Leitungssystem z. B. zu einem Verbraucher weitergeleitet.

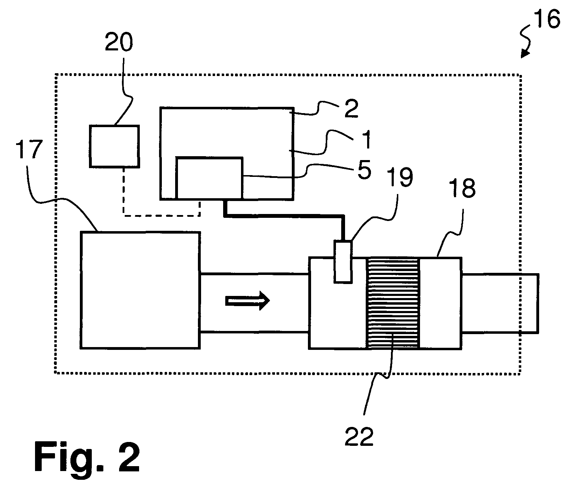

In Fig. 2 ist ein Kraftfahrzeug 16 dargestellt, welches eine Verbrennungskraftmaschine 17 und eine Abgasbehandlungsvorrichtung 18 zur Reinigung der Abgase der Verbrennungskraftmaschine 17 aufweist. In die Abgasbehandlungsvorrichtung 18 ist mit einer Zufuhrvorrichtung 19 flüssiges Additiv zuführbar. In der Abgasbehandlungsvorrichtung 18 ist vorzugsweise ein SCR-Katalysator 22 vorgesehen, mit welchem das Verfahren der selektiven katalytischen Reduktion durchgeführt werden kann, wobei Schadstoffbestandteile im Abgas der Verbrennungskraftmaschine unter Zuhilfenahme des an der Zufuhrvorrichtung 19 zugeführten flüssigen Additivs umgesetzt werden können. Die Zufuhrvorrichtung 19 wird von einer Vorrichtung 1, umfassend eine Fördereinheit 5 und einen Tank 2, mit flüssigem Additiv versorgt. Zusätzlich ist bevorzugt eine Kontrolleinheit 20 vorgesehen, welche die Bereitstellung des flüssigen Additivs mit der Vorrichtung 1 kontrolliert.

### Bezugszeichenliste

- 1: Vorrichtung
- 2: Tank
- 3: Wärmeverteilstruktur
- 4: erster Tankabschnitt
- 5: Fördereinheit
- 6: Heizvorrichtung
- 7: thermische Kopplung
- 8: Flüssigkeitsheizung
- 9: zweiter Tankabschnitt
- 10: Filtereinrichtung
- 11: Öffnung
- 12: Tankboden
- 13: Rippe
- 14: Innenraum
- 15: Tankwand
- 16: Kraftfahrzeug
- 17: Verbrennungskraftmaschine
- 18: Abgasbehandlungsvorrichtung
- 19: Zufuhrvorrichtung
- 20: Kontrolleinheit
- 21: Anschlusselement
- 22: SCR-Katalysator

## Patentansprüche

1. Vorrichtung (1) zur Bereitstellung von flüssigem Additiv, aufweisend einen Tank (2) für das flüssige Additiv, welcher zumindest eine Wärmeverteilstruktur (3) zur Verteilung von Wärme in einem ersten Tankabschnitt (4) aufweist und eine in den Tank (2) eingesetzte Fördereinheit (5) zur Entnahme des flüssigen Additivs aus dem Tank (2), welche zumindest eine Heizvorrichtung (6) umfasst, wobei die Heizvorrichtung (6) der Fördereinheit (5) und die Wärmeverteilstruktur (3) des Tanks (2) durch zumindest eine thermische Kopplung (7) miteinander verbunden sind, **dadurch gekennzeichnet, dass** der Tank (2) eine Tankwand (15) aus Kunststoff und eine Öffnung (11) im Tankboden (12) hat, und die Wärmeverteilstruktur (3) Rippen (13) umfasst, welche sich ausgehend vom Tankboden (12) in einen Innenraum (14) des Tanks (2) erstrecken und zumindest teilweise in die Tankwand (15) eingegossen sind und wobei die Fördereinheit (5) in die Öffnung (11) im Tankboden (12) eingesetzt ist.

2. Vorrichtung (1) nach Patentanspruch 1. wobei die Heizvorrichtung (6) eine elektrische Heizvorrichtung ist, und der Tank (2) eine Flüssigkeitsheizung (8) aufweist.

3. Vorrichtung (1) nach Patentanspruch 2, wobei die Flüssigkeitsheizung (8) zur Einbringung von Wärme in einem zweiten Tankabschnitt (9) ausgebildet ist, und sich der erste Tankabschnitt (4) und der zweite Tankabschnitt (9) zumindest teilweise überlappen.

4. Vorrichtung (1) nach einem der Patentansprüche 2 oder 3, wobei die Flüssigkeitsheizung (8) zumindest teilweise in eine Filtereinrichtung (10) im Tank (2) eingebettet ist, welche dazu eingerichtet ist, flüssiges Additiv zu filtern, das mit Hilfe der Fördereinheit (5) aus dem Tank (2) hinaus gefördert wird.

5. Vorrichtung (1) nach einem der vorhergehenden Patentansprüche, wobei die Wärmeverteilstruktur (3) zumindest teilweise in eine Filtereinrichtung (10) im Tank (2) eingebettet ist, welche dazu eingerichtet ist, flüssiges Additiv zu filtern, welches mit Hilfe der Fördereinheit (5) aus dem Tank (2) hinaus gefördert wird.

6. Verfahren zur Montage einer Vorrichtung (1) zur Bereitstellung von flüssigem Additiv, aufweisend zumindest die folgenden Schritte:
a) Bereitstellen eines Tanks (2) für das flüssige Additiv, welcher eine Tankwand (15) aus Kunststoff hat und zumindest eine Wärmeverteilstruktur (3) aufweist die Rippen (13) umfasst, welche sich ausgehend vom Tankboden (12) in einen Innenraum (14) des Tanks (2) erstrecken und die in die Tankwand (15) eingegossen sind und welcher darüber hinaus eine Öffnung (11) in einem Tankboden (12) aufweist;
b) Bereitstellen einer Fördereinheit (5) zur Entnahme des flüssigen Additivs aus dem Tank (2), welche zumindest eine Heizvorrichtung (6) aufweist;
c) Einsetzen der Fördereinheit (5) in die Öffnung (11) in dem Tankboden (12) des Tanks (2); und
d) Verbinden der Wärmeverteilstruktur (3) und der Heizvorrichtung (6) mit mindestens einer thermischen Kopplung (7).

7. Kraftfahrzeug (16), aufweisend eine Verbrennungskraftmaschine (17) und eine Abgasbehandlungsvorrichtung (18) zur Reinigung der Abgase der Verbrennungskraftmaschine (17), eine Zufuhrvorrichtung (19) zur Zufuhr von flüssigem Additiv in die Abgasbehandlungsvorrichtung (18) sowie eine Vorrichtung (1) nach einem der Patentansprüche 1 bis 5, mit der der Zufuhrvorrichtung (19) flüssiges Additiv bereit gestellt werden kann.

## Claims

1. Apparatus (1) for providing liquid additive, having a tank (2) for the liquid additive, which tank has at least one heat distribution structure (3) for distributing heat in a first tank section (4) and has a delivery unit (5), the latter being inserted into the tank (2) and serving for the withdrawal of the liquid additive from the tank (2) and comprising at least one heating apparatus (6), wherein the heating apparatus (6) of the delivery unit (5) and the heat distribution structure (3) of the tank (2) are connected to one another by at least one thermal coupling (7), **characterized in that** the tank (2) has a tank wall (15) composed of plastic and an opening (11) in the tank base (12), and the heat distribution structure (3) comprises fins (13) which extend from the tank base (12) into an interior (14) of the tank (2) and are at least partially cast into the tank wall (15) and wherein the delivery unit (5) is inserted into the opening (11) in the tank base (12).

2. Apparatus (1) according to Patent Claim 1, wherein the heating apparatus (6) is an electric heating apparatus, and the tank (2) has a liquid-type heater (8).

3. Apparatus (1) according to Patent Claim 2, wherein the liquid-type heater (8) is designed for introducing heat in a second tank section (9), and the first tank section (4) and the second tank section (9) at least partially overlap.

4. Apparatus (1) according to either of Patent Claims 2 and 3, wherein the liquid-type heater (8) is at least partially embedded into a filter device (10) in the tank (2), said filter device being designed for filtering liquid additive that is delivered out of the tank (2) by means of the delivery unit (5).

5. Apparatus (1) according to one of the preceding patent claims, wherein the heat distribution structure (3) is at least partially embedded into a filter device (10) in the tank (2), said filter device being designed for filtering liquid additive that is delivered out of the tank (2) by means of the delivery unit (5).

6. Method for the assembly of an apparatus (1) for providing liquid additive, having at least the following steps:
a) providing a tank (2), which has a tank wall (15) composed of plastic and has at least one heat distribution structure (3), for the liquid additive, which heat distribution structure comprises fins (13) which extend from the tank base (12) into an interior (14) of the tank (2) and which are cast into the tank wall (15), and which tank moreover has an opening (11) in a tank base (12);
b) providing a delivery unit (5), which has at least one heating apparatus (6), for the withdrawal of the liquid additive from the tank (2);
c) inserting the delivery unit (5) into the opening (11) in the tank base (12) of the tank (2); and
d) connecting the heat distribution structure (3) and the heating apparatus (6) by means of at least one thermal coupling (7).

7. Motor vehicle (16) having an internal combustion engine (17) and having an exhaust-gas treatment apparatus (18) for the purification of the exhaust gases of the internal combustion engine (17), having a feed apparatus (19) for feeding liquid additive into the exhaust-gas treatment apparatus (18), and also having an apparatus (1) according to one of Patent Claims 1 to 5, by means of which liquid additive can be provided to the feed apparatus (19).

## Revendications

1. Dispositif (1) pour fournir un additif fluide, présentant un réservoir (2) pour l'additif fluide, qui présente au moins une structure de distribution de la chaleur (3) pour distribuer la chaleur dans une première portion de réservoir (4) et une unité de refoulement (5) insérée dans le réservoir (2) pour prélever l'additif fluide hors du réservoir (2), qui comprend au moins un dispositif de chauffage (6), le dispositif de chauffage (6) de l'unité de refoulement (5) et la structure de distribution de la chaleur (3) du réservoir (2) étant connectés l'un à l'autre par au moins un couplage thermique (7), **caractérisé en ce que** le réservoir (2) présente une paroi de réservoir (15) en plastique et une ouverture (11) dans le fond du réservoir (12), et la structure de distribution de la chaleur (3) comprend des ailettes (13) qui s'étendent depuis le fond du réservoir (12) dans un espace interne (14) du réservoir (2) et qui sont au moins en partie intégrées dans la paroi du réservoir (15) et l'unité de refoulement (5) étant insérée dans l'ouverture (11) dans le fond du réservoir (12).

2. Dispositif (1) selon la revendication 1, dans lequel le dispositif de chauffage (6) est un dispositif de chauffage électrique et le réservoir (2) présente un système de chauffage de liquide (8).

3. Dispositif (1) selon la revendication 2, dans lequel le système de chauffage de liquide (8) est réalisé pour introduire de la chaleur dans une deuxième portion de réservoir (9) et la première portion de réservoir (4) et la deuxième portion de réservoir (9) se chevauchent au moins en partie.

4. Dispositif (1) selon l'une quelconque des revendications 2 ou 3, dans lequel le système de chauffage de liquide (8) est au moins en partie incorporé dans un dispositif de filtre (10) dans le réservoir (2), lequel est prévu pour filtrer un additif fluide qui est refoulé hors du réservoir (2) à l'aide de l'unité de refoulement (5).

5. Dispositif (1) selon l'une quelconque des revendications précédentes, dans lequel la structure de distribution de la chaleur (3) est au moins en partie incorporée dans un dispositif de filtre (10) dans le réservoir (2), lequel est prévu pour filtrer un additif fluide qui est refoulé hors du réservoir (2) à l'aide de l'unité de refoulement (5).

6. Procédé de montage d'un dispositif (1) pour fournir un additif fluide, présentant au moins les étapes suivantes :
a) fourniture d'un réservoir (2) pour l'additif fluide, qui présente une paroi de réservoir (15) en plastique et qui présente au moins une structure de distribution de chaleur (3) qui comprend des ailettes (13) qui s'étendent depuis le fond du réservoir (12) dans un espace interne (14) du réservoir (2) et qui sont intégrées dans la paroi du réservoir (15), et qui présente en outre une ouverture (11) dans un fond du réservoir (12) ;
b) fourniture d'une unité de refoulement (5) pour prélever l'additif fluide hors du réservoir (2), qui présente au moins un dispositif de chauffage (6) ;
c) insertion de l'unité de refoulement (5) dans l'ouverture (11) dans le fond du réservoir (12) du réservoir (2) ; et
d) connexion de la structure de distribution de la chaleur (3) et du dispositif de chauffage (6) à au moins un couplage thermique (7).

7. Véhicule automobile (16), présentant un moteur à combustion interne (17) et un dispositif de traitement des gaz d'échappement (18) pour purifier les gaz d'échappement du moteur à combustion interne (17), un dispositif d'alimentation (19) pour l'alimentation en additif fluide dans le dispositif de traitement des gaz d'échappement (18) ainsi qu'un dispositif (1) selon l'une quelconque des revendications 1 à 5, avec lequel de l'additif fluide peut être fourni au dispositif d'alimentation (19).
